Europäisches Patentamt

European Patent Office

Office européen des brevets

(11) Publication number: **0 306 979 B1**

# EUROPEAN PATENT SPECIFICATION

(45) Date of publication of patent specification: **02.12.92**     (51) Int. Cl.⁵: **F16J 15/34**, F16J 15/40

(21) Application number: **88114795.3**

(22) Date of filing: **09.09.88**

(54) **Magnetic seal assembly.**

(30) Priority: **10.09.87 US 95557**

(43) Date of publication of application:
**15.03.89 Bulletin 89/11**

(45) Publication of the grant of the patent:
**02.12.92 Bulletin 92/49**

(84) Designated Contracting States:
**BE DE FR GB IT NL**

(56) References cited:
CH-A- 347 396          US-A- 2 843 403
US-A- 2 913 289       US-A- 3 050 319
US-A- 3 080 170       US-A- 3 788 650

(73) Proprietor: **DURAMETALLIC CORPORATION**
**2104 Factory Street**
**Kalamazoo Michigan 49001(US)**

(72) Inventor: **Adams, William V.**
**6396 East RS Avenue**
**Scotts Michigan 49088(US)**
Inventor: **Avard, Duane A.**
**8781 West RS Avenue**
**Schoolcraft Michigan 49087(US)**
Inventor: **Waling, Leroy A.**
**3045 Thayer Avenue**
**Kalamazoo Michigan 49004(US)**

(74) Representative: **Patentanwälte Grünecker,**
**Kinkeldey, Stockmair & Partner**
**Maximilianstrasse 58**
**W-8000 München 22(DE)**

## Description

### FIELD OF THE INVENTION

This invention relates to an improved magnetic end face seal assembly, particularly for use as a bearing protection device.

### BACKGROUND OF THE INVENTION

Many pumps utilize either lip-type or labyrinth-type seals in an attempt to sealingly isolate the bearing frames from exterior contamination, but such seals have recognized disadvantages.

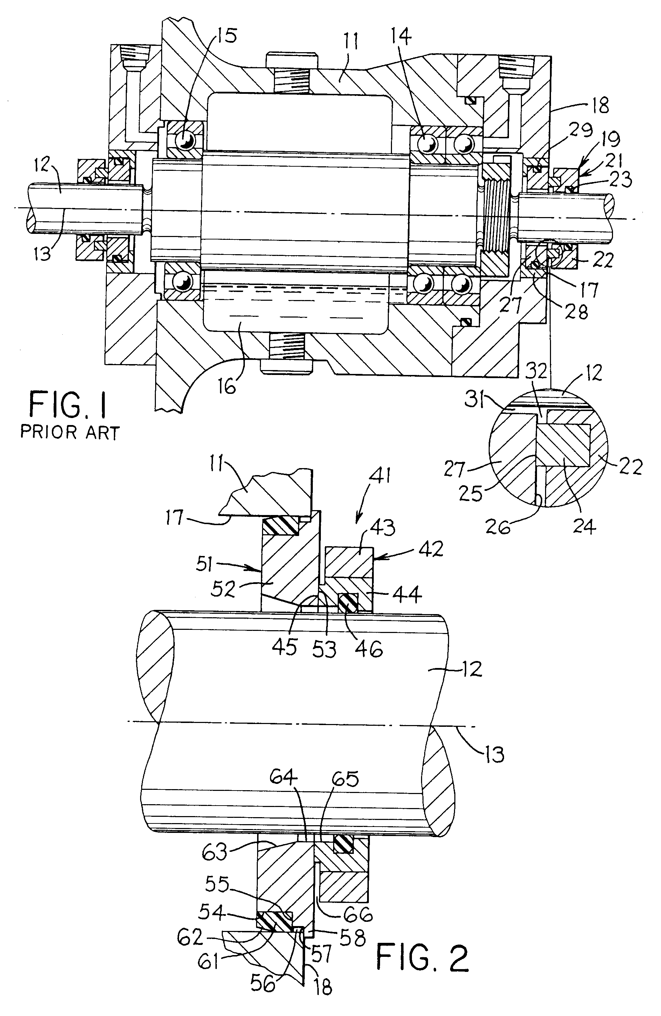

Attempts have also been made to use a magnetic-type mechanical end face seal between the bearing frame and the rotatable shaft. Such arrangement, an example of which is illustrated by Figure 1, provides an improved airtight seal. However, known magnetic-type end face seals still possess features which severely restrict or limit their application. For example, the known seal typically requires the use of a separate insulator for mounting the magnetic insert into the bearing frame bore, thereby undesirably increasing the structural complexity and cost. The known seal also typically utilizes a conventional elastomeric O-ring for sealingly mounting the magnetic insert within the insulator ring, and such typically causes the insert ring to tilt or assume an "out-of-square" position which interferes with proper operation of the seal assembly. This "out-of-square" is caused by elastic distortion or roll of the O-ring during insertion. This known seal also typically creates an interior annular space between the opposed seal rings which tends to collect oil, which oil cannot properly drain back to the bearing sump, and hence ultimately leaks between the seal faces. (See also US-A-2 843 403, US-A-3 050 319, US-A-3 080 170 and US-A-3 788 650 for known magnetic-type end face seals.)

Thus, it is an object of this invention to provide an improved magnetic end face seal assembly which substantially overcomes or improves upon many of the aforementioned disadvantages.

More specifically, the present invention relates to an improved magnetic end face seal assembly wherein the stationary seal ring (i.e., stator) functions as an insert for positioning within the bore of the bearing frame, this insert being a magnetically attractable material, and wherein the rotating seal ring (i.e., rotor) as coupled to the shaft is magnetic and mounts thereon a seal face member which is magnetically urged into sealing engagement with an end face of the seal stator.

In the improved magnetic end face seal, the insert preferably has a seating ring of a hard nonmagnetic material mounted thereon so as to permit direct and substantially rigid but sealed mounting of the insert into the bore of the bearing housing, which support ring also prevents the insert from cocking or going out of square.

### BRIEF DESCRIPTION OF THE DRAWINGS

Figure 1 is a central sectional view illustrating a bearing frame supporting a shaft, and having a conventional magnetic end face associated therewith.

Figure 2 is a fragmentary sectional view illustrating the improved magnetic end face seal assembly of this invention.

### DETAILED DESCRIPTION

Referring to Figure 1, a conventional bearing arrangement includes a bearing frame or housing 11 for rotatably supporting a shaft 12 which rotates about its axis 13. Conventional anti-friction bearings 14 and 15 rotatably support the shaft. The housing defines an oil reservoir 16 for lubrication of the bearings. An enlarged bore or opening 17 opens outwardly through the end face 18 of the housing for permitting outward projection of the shaft 12. A conventional magnetic-type mechanical end face seal assembly 19 cooperates between the rotatable shaft 12 and the stationary housing 11 to sealingly isolate the reservoir 16 from the environment.

This conventional magnetic end face seal assembly 19 includes a rotating ring (rotor) assembly 21 formed by a support ring 22 which is disposed externally of the housing in surrounding relationship to the shaft 12. This ring 22 is sealingly and drivingly engaged with the shaft by a conventional elastomeric O-ring 23. The support ring 22 has an annular groove formed in the inner face thereof, which groove mounts therein a face ring 24, the latter conventionally being of carbon. This face ring 24 projects axially inwardly beyond the inner axial end surface of the ring 22 and, at its inner axial end, defines an annular seal face 25 which is maintained generally in a plane which is substantially perpendicular to the axis 13.

The seal assembly 19 also includes a nonrotating ring (i.e., a stator) 27 which is positioned within the housing bore 17 and is mounted so as to be sealingly and nonrotatably coupled to the bearing housing 11. This nonrotating ring 27 has a seal face 26 formed on the axially outer end surface thereof, whereby the opposed seal faces 25-26 are maintained in flat but relatively rotatable contact with one another to create a sealed relationship therebetween.

The nonrotating ring 27 comprises a magnet, and thus is formed of a magnetizable material. In contrast, the rotating support ring 22 is formed of a magnetically attractable material (namely a conventional ferrite material such as steel) so that it is magnetically attracted axially inwardly toward the stationary magnet 27 to hence maintain the opposed seal faces 25-26 in snug contact with one another.

The magnet 27, commonly referred to as the "insert", is nonrotatably secured to the housing through an intermediate ring 28 which surrounds the insert 27 and is snugly seated against the surrounding wall defining the bore 17. This intermediate mounting ring 28 functions as an insulator so as to isolate the magnet 27 from the housing 11 inasmuch as the latter is typically of ferrite material, such as cast iron or steel.

To create a sealed relationship between the insert 27 and housing 11, there is also provided a conventional elastomeric O-ring 29 disposed for sealing cooperation between the insulator ring 28 and the insert 27. Such O-ring, however, has been observed to be disadvantageous since, during installation, the compression of the O-ring and the accompanying axial movement which occurs due to axial insertion of the insert into the insulator causes axial rolling and hence elastic distortion of the O-ring. Such can cause substantial "springback", and has been observed to often cause significant cocking or tilting of the insert so that the end face 26 thereof is no longer in the desired perpendicular relationship relative to the shaft axis (this being commonly known as "out-of-square").

In addition, this conventional arrangement of Figure 1 provides an annular clearance passage 31 between the shaft and the insert 27, this passage 21 at its inner end communicating with the oil reservoir so that oil can splash into this passage. Passage 31 at its axially outer end, however, terminates in a radially outwardly projecting annular groove 32 as defined between the rings 22 and 27, this groove 32 being bounded by the face ring 24. This groove 32 is created by the fact that the inner diameter of the seal face 26 is smaller than the inner diameter of the seal face 25. This groove 32 tends to collect therein oil which splashes into and through the passage 31, which oil cannot readily flow back to the reservoir, and hence some of this oil invariably leaks between the seal faces 25-26.

Referring now to Figure 2, there is illustrated an improved magnetic end face seal assembly 41 according to the present invention, which assembly cooperates between the stationary housing 11 and the rotatable shaft 12.

The seal assembly 41 includes a rotating ring (rotor) assembly 42 which surrounds and is sealingly and nonrotatably coupled to the shaft 12. This rotor assembly includes a support ring 43 which mounts therein a face ring 44, the latter being typically constructed of carbon. Face ring 44 protrudes axially beyond the support ring 43 and defines a seal face 45 on the inner axial end surface thereof. This seal face 45, as is conventional, extends substantially perpendicular with respect to the shaft axis 13. In addition, an elastomeric O-ring 46 (such as of Viton or Buna "N") is confined by a groove within the ring 44 to nonrotatably and sealingly couple the rotor assembly to the shaft. The rings 43 and 44 have an interference or press fit therebetween to fixedly couple them together.

The ring 43 comprises a magnet and is formed of a magnetizable material. The material defining the magnet 43 may be of several known types, such as barium ferrite (ceramic), Alnico 5, Alnico 8 or neodymium in a plastic base. In the preferred embodiment, magnet 43 is of Alnico 5.

The rotor assembly 42 is disposed adjacent and cooperates with a stationary ring or stator assembly 51 which is nonrotatably and sealingly seated within the open end of the housing bore 17. This stator assembly 51 includes a stationary ring or insert 52 which defines a seal face 53 on the outer axial end surface thereof, which seal face 53 is oriented in a plane which is perpendicular to the shaft axis and is maintained in relatively rotatable but sliding contacting engagement with the opposed seal face 45.

The insert ring 52 is of a magnetically attractable material so that it will cooperate with the magnet 43 to create a strong axially directed magnetic attraction therebetween to hence maintain the opposed seal faces 45 and 53 in proper engagement with one another. Hence, the insert 52 can be constructed of conventional steel, although the insert is preferably provided with a protective surface treatment, such as a nickel/chrome protective plating, or a chrome oxide facing.

The insert ring 52 has an exterior annular wall which is of a stepped configuration as it projects axially, there being two such steps in the preferred embodiment. More specifically, the insert ring has an outer annular wall 54 which projects axially from its inner end surface, this annular wall 54 terminating at an axially intermediate annular shoulder 55 which projects radially outwardly. This shoulder 55 joins to a further annular wall 56 which is of larger diameter than the annular wall 54 but of lesser diameter than the housing bore 17, whereby this annular wall 56 projects axially until joining a second annular shoulder 57 which again projects radially outwardly. This latter shoulder results in the defining of an annular flange 58 which projects outwardly through a sufficient radial extent so as to radially overlap the housing end wall 18. This enables the shoulder 57 to be axially seated against the end wall 18.

The insert 52 has an annular seating member 61 stationarily mounted thereon in encircling relationship thereto. This seat member 61 has a blocklike cross section in that it has an inner annular wall which is stationarily seated against the annular wall 54 of the insert, this being preferably created by means of an interference or press fit between the insert and the seating member. The seating member 61 also has an outer axial end face which abuts against the inner shoulder 55.

Seating member 61 has an outer annular wall 62 which is of increasing diameter as it projects axially from its inner to its outer axial end. That is, this annular wall 62 adjacent the inner axial end (the leftward end in Figure 2) of the seating member has a diameter which is less than the diameter of housing bore 17. The diameter of this outer annular wall 62 progressively increases axially (from left to right in Figure 2) across about one-third the axial width of the wall until reaching a maximum diameter which slightly exceeds the diameter of bore 17 when the seat member 61 is in a nondeformed condition. This latter diameter extends axially across the remaining width. When in the nondeformed condition, the maximum diameter of wall 62 preferably exceeds the bore diameter 17 by an amount which is normally in the range of between about 0.13 and 0.25 mm (about .005 and about .011 inch), although this magnitude will undoubtedly vary with the size of the ring.

The seat member 61 is preferably constructed of a relatively hard plastic or synthetic resin material having a durometer of at least about A95 so that it will have only extremely limited springability or resiliency. Upon insertion into the housing bore 17, only a limited compression of the seat member 61 will occur adjacent the axially outer end thereof, which compression will create a snug stationary support of the insert and will also create a sealed engagement with the housing. This prevents spring-back (i.e., axial bulging), and enables the insert and specifically its seal face 53 to be maintained in perpendicular relationship to the shaft axis with a high degree of accuracy.

The material defining the seat member 61 should also have a very low coefficient of friction to facilitate its insertion into the housing bore 17 and thus minimize any tendency for the material of the insert to roll or spring back.

In the preferred embodiment, the seat member 61 is constructed of Teflon, such as graphite-filled or glass-filled Teflon. However, other materials having properties similar to Teflon can also be utilized. For example, Ryton is one suggested alternative material. The material preferably should have a Shore A durometer hardness of at least about 95. The material must also exhibit little axial bulging (less than about 0.05 mm (about .002 inch)) due to its compressive fit within the housing bore.

The insert 52 has an opening extending axially therethrough which is larger than the diameter of shaft 12, which opening includes a bore 64 which is of substantially uniform diameter and opens inwardly from the seal face 53. This latter bore 64, however, projects only part way through the insert, at which point it merges with a further coaxially aligned bore 63 which is tapered in that it diverges radially outwardly as it projects axially for communication with the inner axial end surface of the insert. A still further bore 65 is defined within the face ring 44, which bore 65 defines the inner diameter of the seal face 45 and is in open communication with the bores 63-64. The bores 64-65, and hence the inner diameters of the seal faces 45 and 53, are of equal diameter. Thus, any lubricant which splashes into the bores 63-65 will not be readily trapped therein, but can flow axially inwardly back to the reservoir, this being facilitated by the diverging or enlarged taper of the bore 63.

The magnet 43 and the magnetically attractable insert 52 are maintained with a small axial spacing or gap 66 therebetween.

In operation, rotation of shaft 12 causes corresponding rotation of the rotor assembly 42. The magnetic attraction created between the magnet 43 and the insert 52 causes the rotor assembly 42 to be urged leftwardly in Figure 2 so that the seal face 45 on the rotor is magnetically held firmly against the opposed seal face 53 on the insert. The shaft rotation results in relative sliding rotation between the faces 45 and 53, which faces are effective in creating a seal therebetween to prevent outward leakage of lubricant, and at the same time prevent inward leakage of contaminants including water or moisture-laden air.

The presence of the seat member 61, and specifically the manner in which it structurally and functionally cooperates between the insert and the housing, sealingly and stationarily supports the insert while maintaining the shoulder 57 as defined on the inner face of the flange 58 properly "squared up" against the housing face 18. This prevents undesired tilting of the seal face 53, whereby a proper sliding seal can thus be maintained between the opposed contacting seal faces 45 and 53.

The magnet ring 43 may be formed by a plurality of circumferentially spaced button magnets mounted on a carrier ring, such as disclosed in US-A-2 843 403.

**Claims**

1. A magnetic-type end face seal assembly for creating a sealed relationship between a housing and a rotatable shaft which projects coaxially outwardly from a bore which opens inwardly from an end wall of the housing having stationary annular insert means (51) and rotating ring means (42) being in sealing engagement with each other, said seal assembly comprising:

annular insert means (51) stationarily positioned within said bore (17) in surrounding relationship to said shaft (12), said insert means including a one-piece insert ring (52) of magnetically attractable material, said insert ring having bore means (63,64) extending axially therethrough and of a diameter larger than said shaft so that said shaft can project through said bore means free of contact with said insert ring;

said insert ring (52) defining a substantially planar annular first seal face (53) on an outer axial end surface thereof; characterized by:

said insert means including a seat member (61) formed as a one-piece ring disposed in external and circling relationship to said insert ring, said seat member being stationarily and fixedly mounted on said insert ring (52) and having a noncircular cross section;

said seat member (61) being of a hard synthetic resin material having only little elasticity, said seat member when in a nondeformed condition having a maximum outer diameter which slightly exceeds the diameter of said housing bore (17) so that the seat member undergoes a very small radial deformation when inserted into said bore to create a stationary and sealed engagement with the wall defining the housing bore;

rotating ring means (42) disposed in surrounding relationship to and nonrotatably coupled to said shaft (12) for rotation therewith, said rotating ring means being positioned axially adjacent said insert means (51);

said rotating ring means (42) including a ring member (44) having a substantially planar annular second seal face (45) formed on an inner axial end surface thereof, said second seal face being disposed in a plane which is substantially perpendicular to the axis of said shaft, said second seal face (45) being positioned directly opposite and maintained in engagement with said first seal face (53); and

said rotating ring means (42) also including magnet means (43) stationarily mounted on said ring member (44), said magnet means being radially spaced from said shaft and positioned closely axially adjacent but separated from said insert ring (53) by a small axial gap, said magnet means cooperating with said insert ring to create a magnetic attracting force which tends to urge said rotating ring means and said insert means axially toward one another for maintaining said first and second seal faces in engagement with one another.

2. An assembly according to Claim 1, characterized in that said seat member (61) is of a blocklike cross section and has an outer annular surface (62) which increases in diameter as the outer annular surface extends from an axially inner location to an axially outer location, said outer annular surface at the axially inner location being of a diameter less than the diameter of said housing bore, and said outer annular surface in the vicinity of the outer axial location being of a diameter greater than the housing bore diameter (17) when the seat member is in a nondeformed condition.

3. An assembly according to Claim 1 or Claim 2, characterized in that the seat member (61) and the insert ring (52) have an interference or press fit therebetween for fixedly securing the seat member and insert ring together, and wherein the seat member axially abuts an axially inwardly facing shoulder (55) defined on the insert ring.

4. An assembly according to any one of Claims 1-3, characterized in that said insert ring (52) includes a radially outwardly projecting annular flange (58) adjacent the outer axial end surface thereof which projects outwardly in radially overlapping and abutting contact with the end wall of the housing in surrounding relationship to the housing bore.

5. An assembly according to any one of Claims 1-4, characterized in that said ring member (44) is constructed of carbon and has a bore therethrough for permitting passage of said shaft, said ring member having an annular groove formed therein so as to open radially outwardly from said last-mentioned bore, said groove being spaced inwardly from opposite axial end surfaces of said ring member, and elastomeric sealing ring means (46) disposed within said groove and maintained in compressive sealing engagement with said shaft for creating a sealed and nonrotatable engagement between said shaft and said rotating ring means (42).

6. An assembly according to any one of Claims 1-5, characterized in that said magnet means (43) externally surrounds said ring member (44) and is fixedly coupled thereto.

7. An assembly according to any one of Claims 1-6, characterized in that said magnet means (43) comprises a ring shaped part which encircles said ring member.

**Patentansprüche**

1. Magnetische Dichtungseinrichtung für eine endseitige Stirnfläche zum Herstellen einer abgedichteten Verbindung zwischen einem Gehäuse und einer rotierenden Welle, die sich koaxial nach außen durch eine Bohrung erstreckt, die sich von einer endseitigen Wand des Gehäuses nach innen öffnet, mit einem stationären, ringförmigen Einsatz (51) und einer rotierenden Ringeinrichtung (42), die in einem abdichtenden Eingriff miteinander stehen, wobei die Dichtungseinrichtung enthält:

   einen ringförmigen Einsatz (51), der feststehend innerhalb der Bohrung (17) angeordnet ist und die Welle (12) umgibt, wobei der Einsatz einen einteiligen Einsatzring (52) aus einem durch einen Magnet anziehbaren Material enthält, wobei der Einsatzring eine Bohrung (63, 64) aufweist, die sich in Axialrichtung durch ihn hindurch erstreckt und einen Durchmesser aufweist, der größer ist als die Welle, so daß die Welle sich durch die Bohrung ohne Kontakt mit dem Einsatzring hindurcherstrecken kann;

   wobei der Einsatzring (52) eine im wesentlichen ebene, ringförmige, erste Dichtungsstirnfläche (53) an einer seiner äußeren, axialen Endflächen bildet, **dadurch gekennzeichnet,** daß der Einsatz ein Lagerteil (61) enthält, das als in einer äußeren und umgebenden Beziehung zum Einsatzring angeordneter, einteiliger Ring ausgebildet ist, wobei das Lagerteil stationär und starr am Einsatzring (52) befestigt ist sowie eine nichtkreisförmige Querschnittsform aufweist;

   daß das Lagerteil (61) aus einem harten, synthetischen Harzmaterial mit nur geringer Elastizität besteht, wobei das Lagerteil in undeformiertem Zustand einen maximalen äußeren Durchmesser aufweist, der den Durchmesser der Bohrung (17) durch das Gehäuse leicht übersteigt, so daß das Lagerteil einer sehr kleinen radialen Verformung unterworfen ist, wenn es in die Bohrung eingesetzt ist, um einen stationären und dichtenden Eingriff mit der die Gehäusebohrung umgebenden Wandung zu bilden;

   daß die rotierende Ringeinrichtung (42) die Welle (12) umgibt und für eine Drehung mit der Welle (12) nichtdrehbar mit ihr gekoppelt ist, wobei die rotierende Ringeinrichtung in Axialrichtung benachbart zum Einsatz (51) angeordnet ist;

   daß die rotierende Ringeinrichtung (42) ein Ringteil (44) aufweist, das eine im wesentlichen ebene, ringförmige, zweite Dichtungsfläche (45) aufweist, die an seiner axial inneren Endfläche angeordnet ist, wobei die zweite Dichtfläche in einer Ebene vorgesehen ist, die sich im wesentlichen senkrecht zur Achse der Welle erstreckt, wobei die zweite Dichtungsfläche (45) direkt gegenüber der ersten Dichtungsfläche (53) angeordnet ist, und einen Eingriff mit der ersten Dichtungsfläche (53) aufrechterhält; und

   daß die drehbare Ringeinrichtung (42) weiterhin eine Magneteinrichtung (43) aufweist, die stationär am Ringteil (44) angeordnet ist, wobei die Magneteinrichtung in Radialrichtung von der Welle beabstandet und in Axialrichtung nahe benachbart dem Einsatzring (53), jedoch von ihm durch einen schmalen, axialen Spalt getrennt angeordnet ist, wobei die Magneteinrichtung mit dem Einsatzring zusammenwirkt, um eine magnetische Anziehungskraft aufzubringen, die dazu tendiert, die rotierende Ringeinrichtung und den Einsatz in Axialrichtung zueinander zu ziehen, um die erste und zweite Dichtungsfläche in Eingriff miteinander zu halten.

2. Einrichtung nach Anspruch 1, **dadurch gekennzeichnet,** daß das Lagerteil (61) eine blockartige Querschnittsform aufweist und eine äußere, ringförmige Oberfläche (62) hat, die im Verlauf der äußeren ringförmigen Oberfläche von einer axial innenliegenden Stelle zu einer axial außenliegenden Stelle im Durchmesser zunimmt, wobei die äußere, ringförmige Oberfläche an der axial innenliegenden Stelle einen Durchmesser aufweist, der geringer ist als der Durchmesser der Gehäusebohrung, und wobei die äußere, ringförmige Oberfläche in der Nähe der axial außen liegenden Stelle einen Durchmesser aufweist, der größer ist als der Durchmesser der Gehäusebohrung (17), wenn das Lagerteil sich in einem unverformten Zustand befindet.

3. Einrichtung nach Anspruch 1 oder 2, **dadurch gekennzeichnet,** daß das Lagerteil (61) und der Einsatzring (52) mit einem überlappenden oder Preßsitz zusammengefügt sind, um das Lagerteil und den Einsatzring fest gegeneinander zu sichern, und wobei das Lagerteil in Axialrichtung an einer axial nach innen gerichteten Schulter (55) am Einsatzring anliegt.

4. Einrichtung nach einem der Ansprüche 1 bis 3, **dadurch gekennzeichnet,** daß der Einsatzring (52) einen sich radial nach außen erstreckenden, ringförmigen Flansch (58) in der Nähe seiner äußeren, axialen Endfläche aufweist, der sich nach außen in radialer Überlappung und in Anschlagkontakt mit der Endwandung des Gehäuses, die Gehäusebohrung umgebend, erstreckt.

**5.** Einrichtung nach einem der Ansprüche 1 bis 4, **dadurch gekennzeichnet,** daß das Ringteil (44) aus Kunststoff gefertigt ist und eine Durchgangsbohrung aufweist, um einen Durchtritt der Welle zu gestatten, wobei das Ringteil mit einer ringförmigen Nut versehen ist, die darin so ausgebildet ist, daß sie sich radial auswärts der letztgenannten Bohrung öffnet, wobei die Nut nach innen von den gegenüberliegenden axialen Endflächen des Ringteiles beabstandet ist, und daß eine elastomere Dichtringeinrichtung (46) in der Nut angeordnet und in Druck-Dichtungskontakt mit der Welle gehalten ist, um einen abgedichteten und nicht-drehbaren Eingriff zwischen der Welle und der rotierenden Ringeinrichtung (42) zu bilden.

**6.** Einrichtung nach einem der Ansprüche 1 bis 5, **dadurch gekennzeichnet,** daß die Magneteinrichtung (43) das Ringteil (44) von außen umgibt und fest mit ihm verbunden ist.

**7.** Einrichtung nach einem der Ansprüche 1 bis 6, **dadurch gekennzeichnet,** daß die Magneteinrichtung (43) ein ringförmiges Teil enthält, das das Ringteil umgibt.

**Revendications**

**1.** Ensemble formant joint d'étanchéité à face d'extrémité du type magnétique destiné à établir une relation étanche entre un logement et un arbre mobile en rotation faisant saillie coaxialement vers l'extérieur hors d'un perçage qui s'ouvre vers l'intérieur depuis une paroi d'extrémité du logement, pourvu de moyens d'insertion annulaires fixes (51) et de moyens annulaires rotatifs (42) en contact d'étanchéité les uns avec les autres, ledit ensemble formant joint d'étanchéité comportant:

les moyens d'insertion annulaires (51) positionnés d'une manière fixe à l'intérieur dudit perçage (17) dans une relation d'encerclement par rapport audit arbre (12), lesdits moyens d'insertion comprenant un anneau d'insertion monobloc (52) fait d'un matériau apte à être attiré magnétiquement, anneau d'insertion qui possède des moyens formant perçage (63, 64) s'étendant axialement à travers lui et ayant un diamètre supérieur à celui dudit arbre, de sorte que ledit arbre peut s'étendre à travers lesdits moyens formant perçage sans être en contact avec ledit anneau d'insertion;

ledit anneau d'insertion (52) définissant une première face d'étanchéité annulaire sensiblement plane (53) sur sa surface d'extrémité axiale extérieure; caractérisé par le fait que :

lesdits moyens d'insertion comportent un organe d'appui (61) réalisé sous la forme d'un anneau monobloc disposé dans une relation extérieure et d'encerclement vis-à-vis dudit anneau d'insertion, ledit organe d'appui étant monté d'une manière fixe et solide sur ledit anneau d'insertion (52) et présentant une section transversale non circulaire;

ledit organe d'appui (61) est fait d'un matériau en résine synthétique dure qui n'est doté que d'une faible élasticité, ledit organe d'appui ayant, dans un état non déformé, un diamètre extérieur maximal légèrement supérieur au diamètre dudit perçage (17) du logement, de sorte que l'organe d'appui subit une déformation radiale très faible, lorsqu'il est inséré dans ledit perçage, afin d'établir un contact fixe et étanche avec la paroi qui définit le perçage du logement;

les moyens annulaires rotatifs (42) sont disposés dans une relation d'encerclement vis-à-vis dudit arbre (12) en étant accouplés d'une manière non mobile en rotation avec celui-ci, afin de tourner solidairement avec lui, lesdits moyens annulaires rotatifs étant positionnés à proximité axialement desdits moyens d'insertion (51);

lesdits moyens annulaires rotatifs (42) comprennent un organe annulaire (44) qui possède une seconde face d'étanchéité annulaire sensiblement plane (45) définie sur sa surface d'extrémité axiale intérieure, ladite seconde face d'étanchéité (45) étant disposée dans un plan sensiblement perpendiculaire à l'axe dudit arbre et positionnée directement en face de ladite première face d'étanchéité (53) en étant maintenue en contact avec celle-ci; et

lesdits moyens annulaires rotatifs (42) comprennent également des moyens formant aimant (43) montés fixes sur ledit organe annulaire (44), lesdits moyens formant aimant étant espacés radialement dudit arbre et positionnés tout près axialement dudit anneau d'insertion (53), mais en étant séparés de ce dernier d'un faible écartement axial, moyens formant aimant qui coopèrent avec ledit anneau d'insertion pour établir une force d'attraction magnétique qui tend à solliciter lesdits moyens annulaires rotatifs et lesdits moyens d'insertion axialement en direction les uns des autres en vue de maintenir lesdites première et seconde faces d'étanchéité en contact l'une avec l'autre.

**2.** Ensemble selon la revendication 1, caractérisé en ce que ledit organe d'appui (61) a une section transversale en forme de bloc et possède une surface annulaire extérieure (62) dont le diamètre va en augmentant au fur et à mesure qu'elle avance depuis un emplacement situé à l'intérieur axialement en direction d'un emplacement situé à l'extérieur axialement, ladite surface annulaire extérieure ayant, au niveau de l'emplacement situé à l'intérieur axialement, un diamètre inférieur au diamètre dudit perçage du logement, et, au voisinage de l'emplacement axial extérieur, un diamètre supérieur au diamètre du perçage (17) du logement, lorsque l'organe d'appui est dans un état non déformé.

3. Ensemble selon la revendication 1 ou la revendication 2, caractérisé en ce que l'organe d'appui (61) et l'anneau d'insertion (52) possèdent entre eux un joint à ajustement serré ou pressé, destiné à assujettir fixement l'un à l'autre l'organe d'appui et l'anneau d'insertion, et dans lequel l'organe d'appui vient buter axialement contre un épaulement (55) orienté vers l'intérieur axialement, défini sur l'anneau d'insertion.

4. Ensemble selon l'une quelconque des revendications 1 à 3, caractérisé en ce que ledit anneau d'insertion (52) comporte, à proximité de sa surface d'extrémité axiale extérieure, un rebord annulaire (58) faisant saillie vers l'extérieur radialement, qui s'avance vers l'extérieur pour venir en contact de chevauchement et de butée radialement avec la paroi d'extrémité du logement dans une relation d'encerclement par rapport au perçage du logement.

5. Ensemble selon l'une quelconque des revendications 1 à 4, caractérisé en ce que ledit organe annulaire (44) est constitué de carbone et possède à travers lui un perçage destiné à permettre le passage dudit arbre, ledit organe annulaire comportant une gorge annulaire définie en lui de façon à s'ouvrir radialement vers l'extérieur depuis ledit perçage mentionné en dernier, ladite gorge étant espacée vers l'intérieur par rapport à des surfaces d'extrémité axiales opposées dudit organe annulaire, et des moyens annulaires d'étanchéité en élastomère (46) disposés à l'intérieur de ladite gorge et maintenus en contact d'étanchéité par compression avec ledit arbre en vue d'établir un accouplement étanche et non mobile en rotation entre ledit arbre et lesdits moyens annulaires rotatifs (42).

6. Ensemble selon l'une quelconque des revendications 1 à 5, caractérisé en ce que lesdits moyens formant aimant (43) entourent extérieurement ledit organe annulaire (44) en étant accouplés d'une manière fixe avec celui-ci.

7. Ensemble selon l'une quelconque des revendications 1 à 6, caractérisé en ce que lesdits moyens formant aimant (43) comportent une partie en forme d'anneau qui entoure ledit organe annulaire.

FIG. 1
PRIOR ART

FIG. 2